# EUROPEAN PATENT SPECIFICATION

(11) **EP 2 686 945 B1**
(45) Date of publication and mention of the grant of the patent: **19.12.2018**
(21) Application number: 12713449.2
(22) Date of filing: 14.03.2012
(51) Int. Cl.: H02M 3/07

(54) **CHARGE PUMP SURGE CURRENT REDUCTION**
SYSTEMPUMPE MIT SPITZENSTROMREDUKTION
RÉDUCTION DE COURANT DE SURCHARGE DE POMPE DE CHARGE

(30) Priority: 14.03.2011 US 201113047689
(43) Date of publication of application: 22.01.2014
(73) Proprietor: Qualcomm Incorporated, San Diego, CA 92121 (US)
(72) Inventor: QUAN, Xiaohong, San Diego CA 92121 (US); SRIVASTAVA, Ankit, San Diego CA 92121 (US); MIAO, Guoqing, San Diego CA 92121 (US)
(74) Representative: Wagner, Karl H.
(86) International application number: PCT/US2012/029128
(87) International publication number: WO 2012/125766

(56) References cited:
- GB-A- 2 444 988
- JP-A- 10 014 218
- US-A1- 2005 270 086
- US-B1- 7 456 677

## Description

### RELATED APPLICATIONS

This application is related to U.S. Pat. App. Ser. No. 12/041,414, entitled "System and Method for Reducing Power Consumption for Audio Playback," filed March 3, 2008, and to U.S. Pat. App. Ser. No. 12/407,238, entitled "Digital Filtering in a Class D Amplifier System to Reduce Noise Fold Over," filed March 19, 2009.

### BACKGROUND

### Field

The disclosure relates to charge pumps, and in particular, to techniques for reducing surge current drawn from a charge pump voltage supply during charge pump operation.

### Background

GB2444988 discloses a charge pump according to the preamble of claim 1 and a method according to the preamble of claim 9.

Charge pumps are commonly utilized in electronic circuitry to step a given voltage supply level up or down, and/or to invert the supply to an inverse voltage level to power a loading circuit. A charge pump may find application in, e.g., a class G amplifier architecture, wherein the voltage supply level provided to an amplifier may be varied depending on the level of the input signal to be amplified. In such applications, a charge pump may be used to provide the variable voltage supply levels to a power amplifier, e.g., in response to an indication of the input signal level as determined by a charge pump controller. The charge pump controller may, e.g., control a gain mode of the charge pump, and/or a charge pump switching frequency.

During charge pump operation, a plurality of switches may be alternately configured to charge one or more capacitors using the voltage supply, and then to couple the one or more capacitors to the load. In certain situations, e.g., when a gain mode of the charge pump is switched, a large voltage differential may be placed across one or more of such switches. Such large voltage differentials may cause an unacceptably large surge current to be drawn from the voltage supply.

It would be desirable to provide techniques for reducing the maximum level of surge current drawn by a charge pump, while maintaining efficient overall charge pump operation. This goal is reached by a charge pump apparatus according to claim 1 and a method according to claim 9.

### BRIEF DESCRIPTION OF THE DRAWINGS

FIG 1 illustrates an exemplary embodiment of a charge pump application according to the present disclosure.
FIG 2 illustrates an exemplary embodiment of the internal switches within a charge pump according to the present disclosure.
FIG 3A illustrates a configuration of switches in the first gain mode, or Gain = ½, over three phases.
FIG 3B illustrates the configuration of the switches in the second gain mode, or Gain = 1, over two phases.
FIG 4 illustrates an exemplary embodiment of a charge pump wherein an extra switch S7, also denoted herein as a "bypass switch," is provided between Vdd and Vpos to decrease the path resistance between during Gain = 1, Phase I.
FIG 5 illustrates plots depicting the situation wherein a large voltage difference across a switch leads to large surge current.
FIG 6 illustrates plots depicting the operation of an exemplary embodiment of the present disclosure.
FIGs 7 and 8 illustrate an exemplary embodiment of a scheme for decreasing R_S1 over time using switches coupled in parallel.
FIGs 9 and 10 illustrate an exemplary embodiment wherein, to accomplish the dynamic adjustment of R_S7, the switch S7 coupling Vdd and Vpos is further implemented using a plurality M of sub-switches.
FIG 11 illustrates an exemplary embodiment of a method according to the present disclosure.
FIG 12 illustrates an exemplary embodiment of a Class G power amplifier which may employ the charge pump techniques of the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. The disclosure is only limited by the scope of the appended claims.

The detailed description set forth below in connection with the appended drawings is intended as a description of exemplary aspects of the invention and is not intended to represent the only exemplary aspects in which the invention can be practiced. The term "exemplary" used throughout this description means "serving as an example, instance, or illustration," and should not necessarily be construed as preferred or advantageous over other exemplary aspects. The detailed description includes specific details for the purpose of providing a thorough understanding of the exemplary aspects of the invention. It will be apparent to those skilled in the art that the exemplary aspects of the invention may be practiced without these specific details. In some instances, well-known structures and devices are shown in block diagram form in order to avoid obscuring the novelty of the exemplary aspects presented herein.

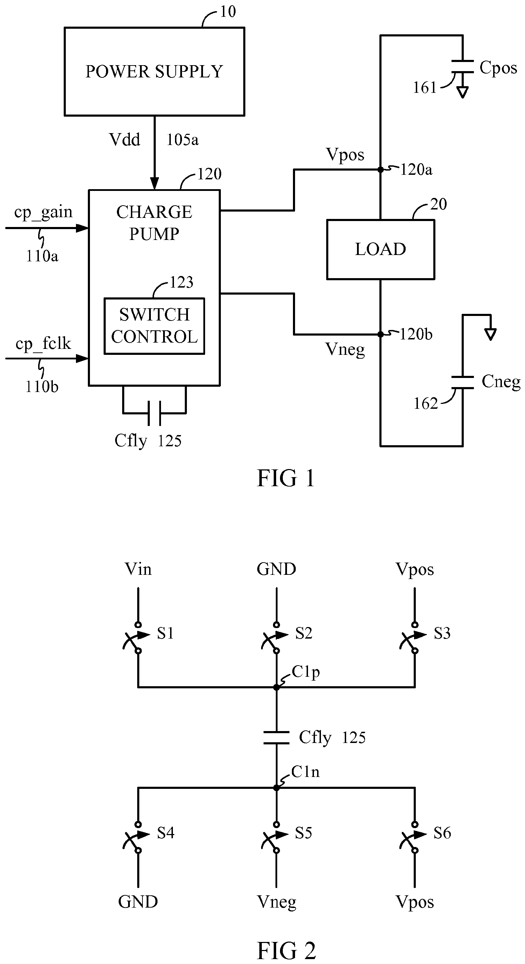

FIG 1 illustrates an exemplary embodiment of a charge pump application according to the present disclosure. Note the charge pump application shown in FIG 1 is given for illustrative purposes only, and is not meant to limit the scope of the present disclosure to any particular charge pump applications.

In FIG 1, a charge pump 120 is provided with a supply voltage Vdd 105a from a power supply 10. In an exemplary embodiment, the power supply 10 may be, e.g., a switched-mode power supply (SMPS) that may also supply power to other electronic modules. The charge pump 120 generates output voltages Vpos 120a and Vneg 120b from the voltage Vdd 105a by configuring a plurality of switches (not shown in FIG 1) to successively charge and discharge a flying capacitor Cfly 125. In the exemplary embodiment shown, the charge pump gain, or the relative gain from the level of Vdd to the levels of Vpos and Vneg, is controlled by a control signal cp_gain 110a. Likewise, the charge pump switching frequency, which determines the frequency at which the internal charge pump switches are activated, is controlled by a control signal cp_fclk 110b. The control signals cp_gain and cp_fclk may be provided to a switch control module 123 which controls the opening and closing of the internal charge pump switches.

As shown in FIG 1, capacitors Cpos 161 and Cneg 162 may be provided to store the energy supplied by the charge pump, and to maintain the voltage levels Vpos 120a and Vneg 120b, respectively, to supply power to a load module 20.

FIG 2 illustrates an exemplary embodiment of the internal switches within a charge pump according to the present disclosure. Note the particular charge pump switches shown in FIG 2 are described for illustrative purposes only, and are not meant to limit the scope of the present disclosure to any particular implementation of a charge pump. One of ordinary skill in the art will appreciate that an alternative number and/or topology of switches may be used to accomplish the same functions as described herein with reference to FIG 2. Such alternative exemplary embodiments are contemplated to be within the scope of the present disclosure.

In FIG 2, the capacitor Cfly 125 has terminals C1p, C1n coupled to a plurality of switches S1-S6. C1p and C1n may also be denoted herein as the first and second flying capacitor nodes, respectively. The switches S1-S6 are configured to open and close by the switch control module 123 over a series of operational phases as further described hereinbelow to generate the output voltages Vpos 120a and Vneg 120b. In particular, in a first gain mode corresponding to Gain = ½, the switches S1-S6 may be operated over a serial repetition of three sequential phases, while in a second gain mode corresponding to Gain = 1, the switches S1-S6 may be operated over a serial repetition of two sequential phases.

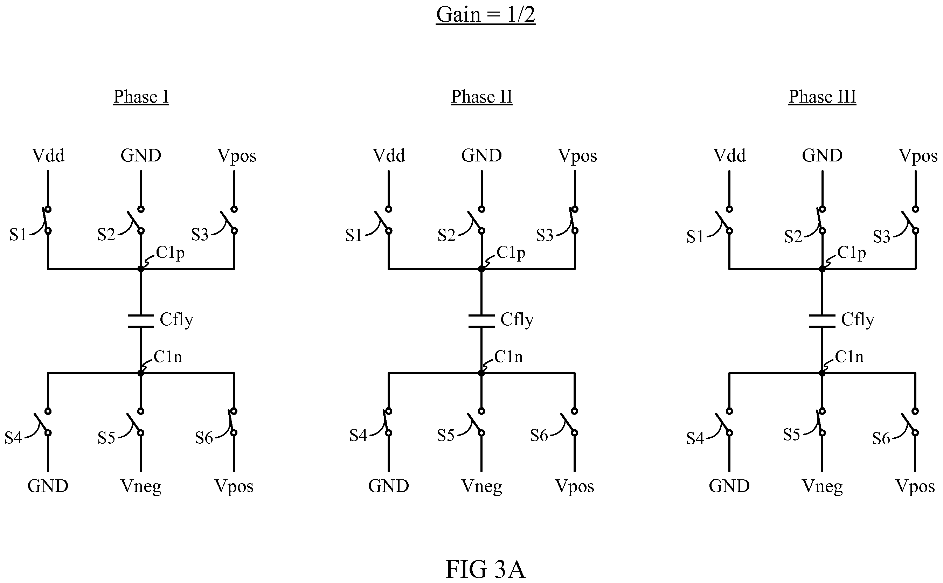

FIG 3A illustrates a configuration of switches in the first gain mode, or Gain = ½, over three phases. As shown in FIG 3A, during Phase I, terminals C1p and C1n of Cfly are coupled to Vdd and Vpos nodes, respectively. During Phase II, terminals C1p and C1n are coupled to Vpos and GND nodes, respectively. During Phase III, terminals C1p and C1n are coupled to GND and Vneg nodes, respectively.

It will be appreciated from the aforementioned configuration of switches that the total voltage across Cfly will approach Vdd / 2 in steady state (subject to loading), as Phases I and II effectively divide the supply voltage Vdd in half between Vpos and GND during Phases I and II. During Phase III, Cfly is inverted, and Vneg approaches -Vdd / 2.

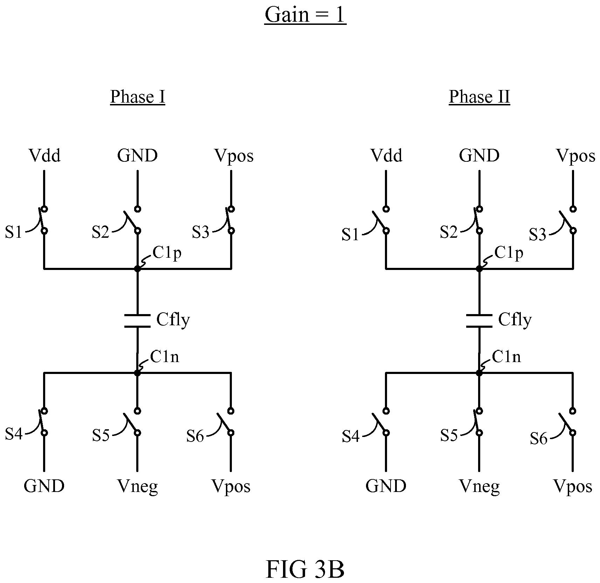

FIG 3B illustrates the configuration of the switches in the second gain mode, or Gain = 1, over two phases. As shown in FIG 3B, during Phase I, terminal C1p of Cfly is coupled to both Vdd and Vpos, while terminal C1n of Cfly is coupled to GND. In this phase, the supply voltage Vdd directly charges the terminal C1p of Cfly via switch S1, also denoted herein as the "first switch." Vdd is also coupled to the positive output voltage node Vpos via the series connection of switches S1 and S3, thereby charging one of the terminals of capacitor Cpos 161 (not shown in FIG 3B). In Phase I, the total voltage across Cfly approaches Vdd, and Vpos also approaches Vdd.

During Phase II, terminals C1p and C1n are coupled to GND and Vneg nodes, respectively. In this phase, C1n is coupled to the negative output voltage node Vneg via switch S5, thereby causing the voltage Vneg to approach -Vdd, and charging one of the terminals of capacitor Cneg 162 (not shown in FIG 3B).

One of ordinary skill in the art will appreciate that in alternative exemplary embodiments, the sequence of the phases need not be as shown in FIGs 3A and 3B, and may instead be alternatively arranged. For example, the sequence of the phases shown may be varied. Furthermore, it will be appreciated that in certain applications of the charge pump not requiring an inverted (negative) supply voltage, Phase III of gain mode = ½ may be omitted. Additional phases may also be provided. Such alternative exemplary embodiments are contemplated to be within the scope of the present disclosure.

As earlier described with reference to FIG 3A, during Gain = 1, Phase I, the supply voltage Vdd is called upon to charge the terminal C1p of Cfly via switch S1, as well as the positive output voltage node Vpos via the series connection of switches S1 and S3. It will be appreciated that the series connection of the two switches S1 and S3 increases the path resistance between Vdd and Vpos over that of one switch, and may thus undesirably increase the time required to charge Vpos by Vdd.

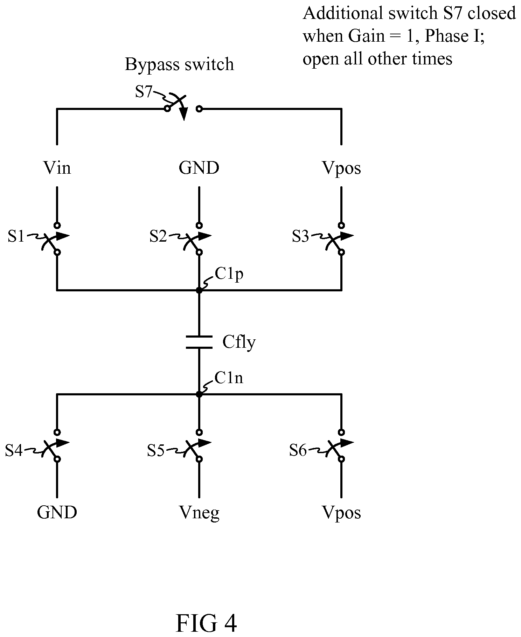

FIG 4 illustrates an exemplary embodiment of a charge pump wherein an extra switch S7, also denoted herein as a "bypass switch," is provided between Vdd and Vpos to decrease the path resistance between Vdd and Vpos during Gain = 1, Phase I. In FIG 4, the switch S7 is configured to be closed only during Gain = 1, Phase I, and to be open during all other phases. By providing an extra conductive path between Vdd and Vpos, the time required to charge Vpos during Gain = 1, Phase I may advantageously be reduced.

In an aspect of the present disclosure, techniques are provided to reduce surge current drawn by the charge pump from the voltage supply VDD when switching a gain mode of the charge pump. As earlier described with reference to FIG 3A, when Gain = ½, the voltage across Cfly approaches Vdd / 2. If subsequently, the gain mode is switched from Gain = ½ to Gain = 1, there may be a voltage difference of up to Vdd / 2 or more across switch S1 when C1p is initially coupled to Vdd. Such a voltage difference may draw a large supply current from Vdd, which may undesirably exceed the power supply (e.g., SMPS) current limit and introduce voltage ripple at Vdd.

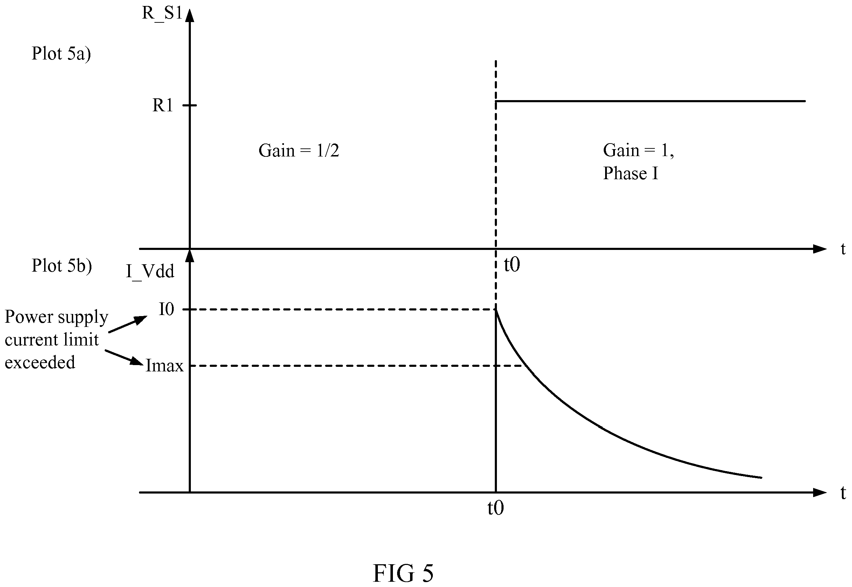

FIG 5 illustrates plots depicting the situation described hereinabove. In FIG 5, plot 5a) shows the on-resistance of S1 (R_S1) following the time t0 when the charge pump switches from Gain = ½ to Gain = 1, Phase I. As seen from plot 5a), when S1 is closed, R_S1 presents a constant on-resistance of R1 at time t0.

Plot 5b) shows the current I_Vdd drawn from the voltage supply Vdd over the time period corresponding to plot 5a). As seen from plot 5b), at t0, I_Vdd surges to a maximum value 10 at time t0, in response to the voltage difference across S1 being approximately Vdd / 2, as earlier described herein. After t0, I_Vdd decreases over time as the node Vpos is gradually charged. It will be seen that the current of I0 momentarily exceeds the maximum power supply current limit Imax immediately following t0.

To reduce the surge current, it will be appreciated that the on-resistance R_S1 may be increased. However, increasing R_S1 would undesirably increase the time required to charge Vpos, increase the equivalent resistance on Vpos, and also increase the amount of voltage ripple present on Vpos.

In an exemplary embodiment, R_S1 may be dynamically decreased over time during Gain = 1, Phase I, to advantageously reduce surge current resulting from gain switching, while simultaneously preserving low on-resistance during steady state operation.

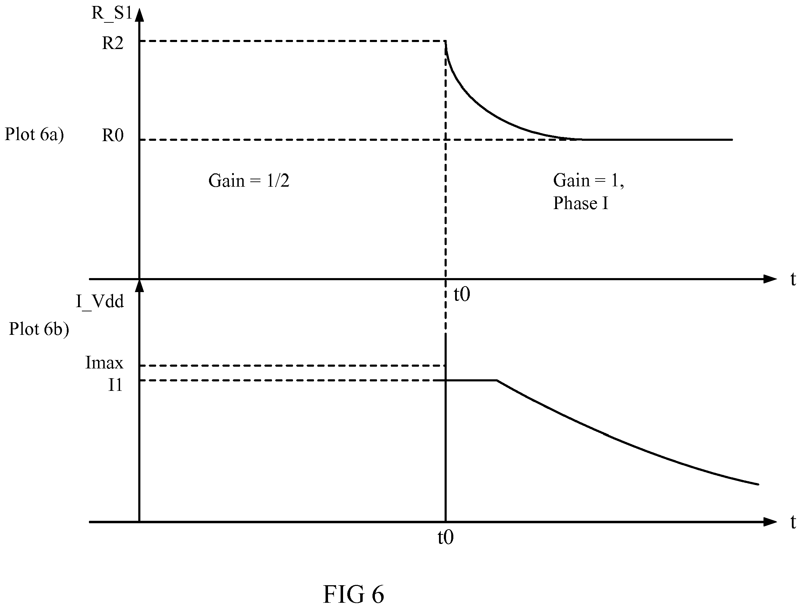

FIG 6 illustrates plots depicting the operation of an exemplary embodiment of the present disclosure. As shown in plot 6a), at time t0 the on-resistance R_S1 is initially set to a value R2. As seen from the corresponding current plot 6b), R2 is chosen such that the net current I_Vdd drawn from Vdd at time t0 is a value I1 less than Imax. Subsequent to t0, the resistance R_S1 is decreased from R2 to R0, thereby keeping the current I_Vdd approximately constant for some time following t0. After R_S1 reaches R0, R_S1 is held constant at R0, and thus I_Vdd decreases thereafter as a result of C1p eventually being charged up in voltage.

It will be appreciated that the profile shown for the decrease in R_S1 over time is given for illustrative purposes only, and is not meant to limit the scope of the present disclosure to any particular profile shown. In an exemplary embodiment, R_S1 may be decreased in discrete steps, e.g., by successively closing switches coupled in parallel, as further described hereinbelow. In alternative exemplary embodiments, other techniques for decreasing resistance over time may be applied, e.g., continuously decreasing the channel resistance of an MOS transistor by increasing a gate control voltage, etc. Note R_S1 may be decreased linearly over time, or according to any other functional relationship. Such alternative exemplary embodiments are contemplated to be within the scope of the present disclosure.

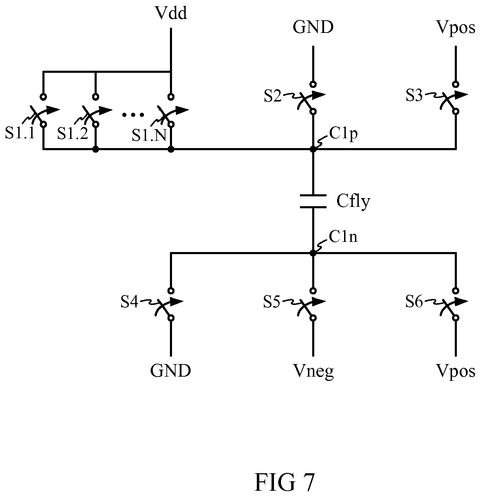

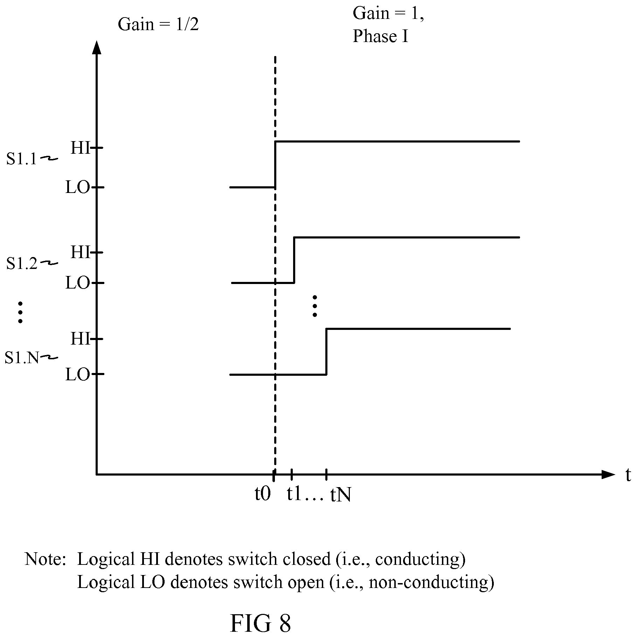

FIGs 7 and 8 illustrate an exemplary embodiment of a scheme for decreasing R_S1 over time using switches coupled in parallel. Note FIGs 7 and 8 are shown for illustrative purposes only, and are not meant to restrict the scope of the present disclosure to any particular techniques for implementing a variable on-resistance for S1.

In FIG 7, the switch S1 is implemented as a plurality N of parallel sub-switches S1.1 through S1.N. To decrease R_S1 in discrete steps, the sub-switches may be successively closed over time following t0. For example, as shown in the plot of FIG 8, S1.1 may be closed at time t0, S1.2 may be closed at time t1 following t0, etc., and S1.N may be closed at time tN after all other sub-switches have been closed.

In a further exemplary embodiment, the techniques described for decreasing the on-resistance of switch S1 may be similarly applied to the bypass switch S7, earlier described herein with reference to FIG 4. From FIG 4, it will be appreciated that a large voltage difference may also exist across S7 when the charge pump switches from Gain = ½ to Gain = 1, Phase I. To decrease the resulting surge current that may be drawn from Vdd, the on-resistance of S7 (R_S7) may also be decreased over time during Gain = 1, Phase I.

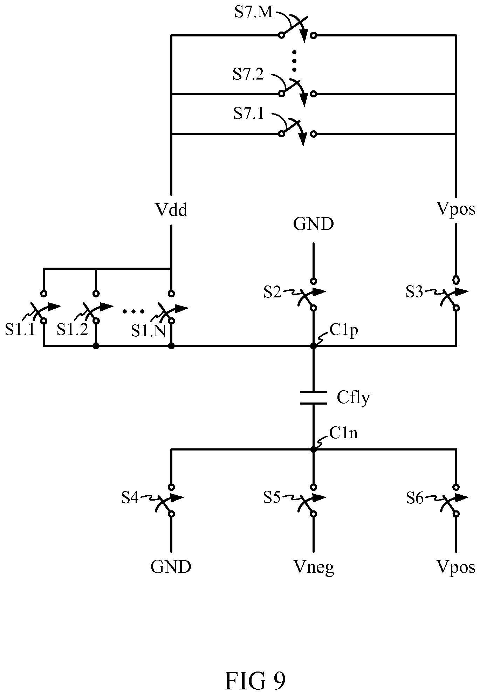

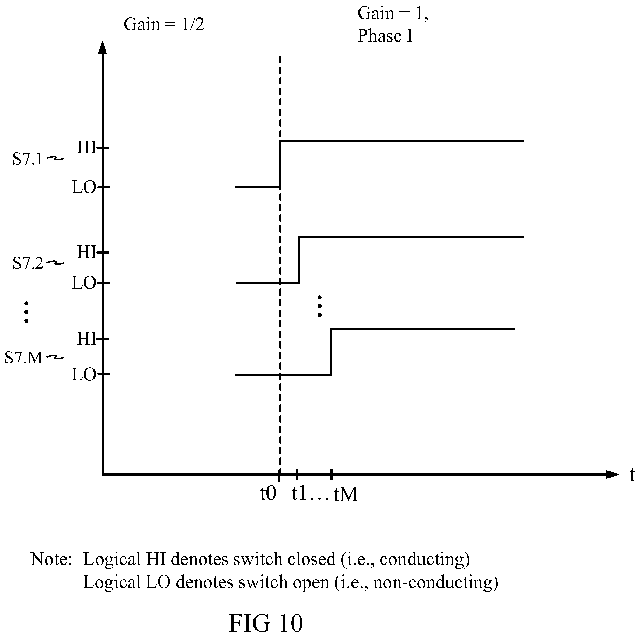

FIGs 9 and 10 illustrate an exemplary embodiment wherein, to accomplish the dynamic adjustment of R_S7, the bypass switch S7 coupling Vdd and Vpos is further implemented using a plurality M of sub-switches. In FIG 9, the configuration of sub-switches S7.1 through S7.M may be operated similarly as described for switches S1.1 through S1.N shown in FIGs 7 and 8. For example, as shown in FIG 10, S7.1 may be closed at time t0', S7.2 may be closed at time t1' following t0', etc., and S7.M may be closed at time tM' after all other sub-switches have been closed.

While exemplary embodiments have been described herein for changing the on-resistance of switches S1 and S7, it will be appreciated that the on-resistance of any of the switches S1-S7 may be varied according to the principles of the present disclosure. Such alternative exemplary embodiments are contemplated to be within the scope of the present disclosure.

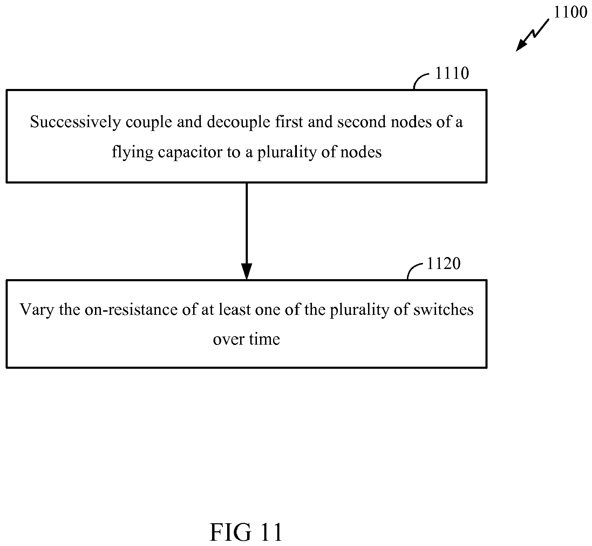

FIG 11 illustrates an exemplary embodiment of a method 1100 according to the present disclosure. It will be appreciated that FIG 11 is shown for illustrative purposes only, and is not meant to limit the scope of the present disclosure to any particular methods shown.

In FIG 11, at block 1110, first and second nodes of a flying capacitor are successively coupled and decoupled to a plurality of nodes.

At block 1120, the on-resistance of at least one of the plurality of switches is varied over time.

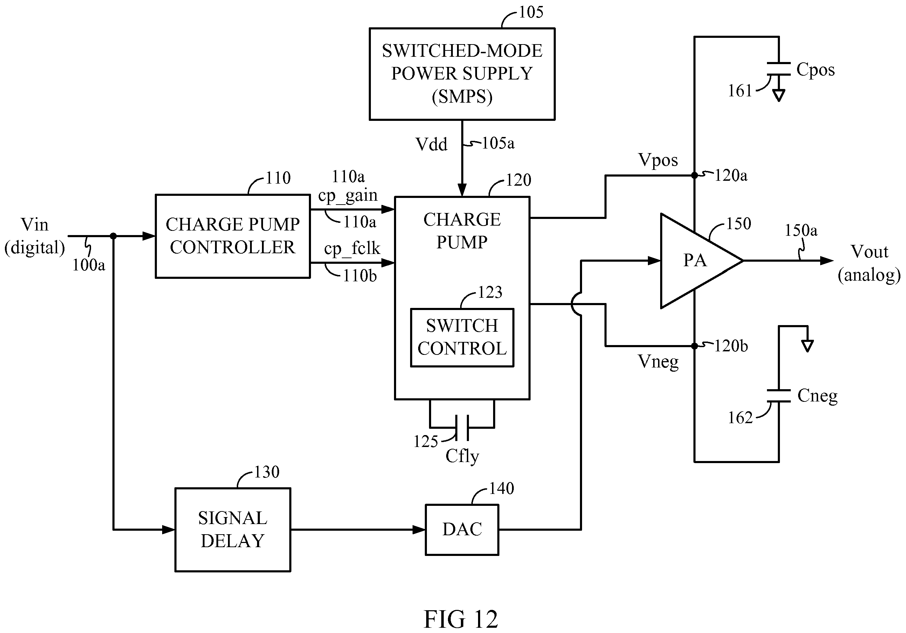

FIG 12 illustrates an exemplary embodiment of a Class G power amplifier which may employ the charge pump techniques of the present disclosure. Note the application in FIG 12 is shown for illustrative purposes only, and is not meant to limit the scope of the present disclosure to any particular applications utilizing a charge pump. It will be appreciated that a charge pump may also be utilized in other circuitry other than a Class G power amplifier, and such alternative exemplary embodiments are contemplated to be within the scope of the present disclosure.

In FIG 12, a digital input signal Vin 100a is provided to both a charge pump controller 110 and a signal delay module 130. A delayed version 130a of the digital input signal Vin 100a is provided to a digital-to-analog converter (DAC) 140, which generates a delayed analog version 140a of signal 100a. The analog signal 140a is provided to a power amplifier (PA) 150, which generates the analog output signal Vout 150a. Power to the PA 150 is supplied by a charge pump 120 via voltage levels 120a, 120b. The level of the voltage supply to the PA 150 may be dynamically adjusted.

The charge pump controller 110 accepts the digital input signal Vin 100a, and generates a charge pump gain control signal cp_gain 110a and a charge pump frequency control signal cp_fclk 110b. The signals 110a, 110b are provided to the charge pump 120 to control the charge pump gain setting and the charge pump switching frequency, respectively. The charge pump 120 includes a switch control module 123 which may control the operation of switches and sub-switches within the charge pump, as well as vary the on-resistance of any of the switches within the charge pump, e.g., as described with reference to FIGs 7-11 hereinabove. The switch control module 123 may accept the signals cp_gain 110a and cp_fclk 110b to control the operation of the switches in the charge pump 120.

In an exemplary embodiment, per class G amplifier operation, the charge pump controller 110 adjusts the signal 110a to, e.g., increase the voltage Vpos 120a (and decrease the voltage Vneg 120b) when the magnitude of the signal Vin 100a is higher, and correspondingly decrease the voltage Vpos 120a (and decrease the voltage Vneg 120b) when the magnitude of Vin 100b is lower. The charge pump controller 110 may further adjust the signal 110b to, e.g., increase the charge pump switching frequency when the level of the signal Vin 100a is higher, and decrease the charge pump switching frequency when the level of the signal Vin 100a is lower.

In the exemplary embodiment shown, power to the charge pump 120 is supplied by the voltage Vdd 105a from a switched-mode power supply (SMPS) 105. It will be appreciated that in alternative exemplary embodiments, the voltage Vdd 105a need not be supplied by an SMPS module, and may instead be supplied by any other type of voltage supply known in the art.

In this specification and in the claims, it will be understood that when an element is referred to as being "connected to" or "coupled to" another element, it can be directly connected or coupled to the other element or intervening elements may be present. In contrast, when an element is referred to as being "directly connected to" or "directly coupled to" another element, there are no intervening elements present.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill in the art would further appreciate that the various illustrative logical blocks, modules, circuits, and algorithm steps described in connection with the exemplary aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the exemplary aspects of the invention.

The various illustrative logical blocks, modules, and circuits described in connection with the exemplary aspects disclosed herein may be implemented or performed with a general purpose processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the exemplary aspects disclosed herein may be embodied directly in hardware, in a software module executed by a processor, or in a combination of the two. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-Ray disc where disks usually reproduce data magnetically, while discs reproduce data optically with lasers. Combinations of the above should also be included within the scope of computer-readable media.

The previous description of the disclosed exemplary aspects is provided to enable any person skilled in the art to make or use the invention. Various modifications to these exemplary aspects will be readily apparent to those skilled in the art, and the generic principles defined herein may be applied to other exemplary aspects without departing from the scope of the appended claims.

## Claims

1. A charge pump apparatus comprising:
a switch control module (123); and
a plurality of switches (S1-S6) configured by the switch control module to:
successively couple and decouple first (C1p) and second nodes (C1n) of a flying capacitor (Cfly) to a plurality of nodes (Vdd, GND, Vpos, Vneg) over a first plurality of sequential phases when operating in a first gain mode, and
successively couple and decouple first and second nodes of the flying capacitor to the plurality of nodes over a second plurality of sequential phases when operating in a second gain mode;
**characterized in that** at least one of the plurality of switches is configured to have a variable on-resistance.

2. The apparatus of claim 1, the plurality of nodes including a voltage supply node, a positive output voltage node, and a ground node.

3. The apparatus of claim 1, the plurality of switches including a first switch, wherein:
the plurality of switches is configured for operation in first and second gain modes;
the voltage supply node is coupled to the first flying capacitor node using the first switch and the ground node is coupled to the second flying capacitor node during said second gain mode; and
the switch control module is configured to decrease the on-resistance of the first switch over time during said second gain mode.

4. The apparatus of claim 3, the plurality of switches configured by the switch control module to:
couple the first flying capacitor node to the voltage supply node and the second flying capacitor node to the output voltage node during a first phase of said first gain mode; and
couple the first flying capacitor node to the output voltage node and the second flying capacitor node to the ground node during a second phase of said first gain mode.

5. The apparatus of claim 3, wherein said on-resistance of said first switch is configured to be decreased over time only during a first phase of said second gain mode following a change from said first gain mode to said second gain mode.

6. The apparatus of claim 3, the plurality of switches configured by the switch control module to:
couple the first flying capacitor node to the voltage supply node and the second flying capacitor node to the ground node during a first phase of said second gain mode; and
couple the first flying capacitor node to the ground node and the second flying capacitor node to a negative output voltage node during a second phase of said second gain mode; and preferably
the plurality of switches further configured by the switch control module to:
couple the first flying capacitor node to the voltage supply node and the second flying capacitor node to the output voltage node during a first phase of said first gain mode;
couple the first flying capacitor node to the output voltage node and the second flying capacitor node to the ground node during a second phase of said first gain mode; and
couple the first flying capacitor node to the ground node and the second flying capacitor node to the negative output voltage node during a third phase of said first gain mode.

7. The apparatus of claim 1, the at least one switch including a plurality of sub-switches coupled in parallel, the switch control module being configured to decrease the on-resistance of the at least one switch by selectively closing the plurality of sub-switches in succession; or
the at least one switch including a MOS transistor, the switch control module being configured to decrease the on-resistance of the at least one switch by increasing a gate voltage of the MOS transistor.

8. The apparatus of claim 3, the plurality of switches further including a bypass switch configured by the switch control module to couple the voltage supply node to the positive output voltage node during said second gain mode, and preferably the switch control module configured to decrease the on-resistance of the bypass switch during said second gain mode; or
the plurality of switches configured to:
couple the first flying capacitor node to the output voltage node and the second flying capacitor node to the ground node during a first phase of said first gain mode; and
couple the first flying capacitor node to the voltage supply node and the second flying capacitor node to the output voltage node during a second phase of said first gain mode.

9. A method comprising:
successively coupling and decoupling first and second nodes of a flying capacitor to a plurality of nodes over a first plurality of sequential phases when operating in a first gain mode, and
successively coupling and decoupling first and second nodes of the flying capacitor to a plurality of nodes over a second plurality of sequential phases when operating in a second gain mode; **characterized in that** it comprises the step of
varying the on-resistance of at least one of the plurality of switches over time.

10. The method of claim 9, the plurality of nodes including a voltage supply node, a positive output voltage node, and a ground node.

11. The method of claim 10, the plurality of switches including a first switch, the method further comprising:
configuring the plurality of switches for operation in first and second gain modes;
coupling the voltage supply node to the first flying capacitor node using the first switch and coupling the ground node to the second flying capacitor node during said second gain mode; and
decreasing the on-resistance of the first switch over time during said second gain mode.

12. The method of claim 11, the successively coupling and decoupling including:
coupling the first flying capacitor node to the voltage supply node and coupling the second flying capacitor node to the output voltage node during a first phase of said first gain mode; and
coupling the first flying capacitor node to the output voltage node and coupling the second flying capacitor node to the ground node during a second phase of said first gain mode; and preferably
coupling the first flying capacitor node to the ground node and the second flying capacitor node to the negative output voltage node during a third phase of said first gain mode.

13. The method of claim 11, said decreasing the on-resistance of the first switch over time during said second gain mode including decreasing said on-resistance only during a first phase of said second gain mode following a change from said first gain mode to said second gain mode; and preferably
further comprising:
during a second phase of said second gain mode, coupling the first flying capacitor node to the ground node, and coupling the second flying capacitor node to a negative output voltage node.

14. The method of claim 10, said varying the on-resistance of at least one of the plurality of switches including selectively closing a plurality of sub-switches in succession; or
said varying the on-resistance of at least one of the plurality of switches including increasing a gate voltage of a MOS transistor.

15. The method of claim 11, further comprising:
during the second gain mode, coupling the voltage supply node to the positive output voltage node using a bypass switch; and preferably
further comprising decreasing the on-resistance of the bypass switch during said second gain mode; and further preferably
said decreasing the on-resistance of the bypass switch including selectively closing a plurality of sub-switches in succession; or the bypass switch including a MOS transistor, said decreasing the on-resistance of the bypass switch including increasing a gate voltage of the MOS transistor.

## Patentansprüche

1. Eine Ladungspumpenvorrichtung, welche Folgendes aufweist:
ein Schaltersteuerungsmodul (123); und
eine Mehrzahl von Schaltern (S1-S6), welche durch das Schaltersteuerungsmodul zu Folgendem konfiguriert sind:
aufeinanderfolgendes Verbinden und Trennen von ersten (C1p) und zweiten Knoten (C1n) eines Flying Capacitor (Cfly) mit einer Mehrzahl von Knoten (Vdd, Gnd, Vpos, Vneg) über eine erste Mehrzahl von sequenziellen Phasen, wenn ein Betrieb in einem ersten Verstärkungsmodus erfolgt, und
aufeinanderfolgendes Verbinden und Trennen von ersten und zweiten Knoten des Flying Capacitor zu der Mehrzahl von Knoten über eine zweite Mehrzahl von sequenziellen Phasen, wenn der Betrieb in einem zweiten Verstärkungsmodus erfolgt;
**dadurch gekennzeichnet, dass** mindestens einer der Mehrzahl von Schaltern dazu konfiguriert ist, einen variablen An-Widerstand zu haben.

2. Die Vorrichtung gemäß Anspruch 1, wobei die Mehrzahl von Knoten einen Spannungsversorgungsknoten, einen Knoten einer positiven Ausgangsspannung und einen Erdungsknoten aufweist.

3. Die Vorrichtung gemäß Anspruch 1, wobei die Mehrzahl von Schaltern einen ersten Schalter aufweist, wobei:
die Mehrzahl von Schaltern konfiguriert ist zum Betrieb in ersten und zweiten Verstärkungsmodi;
der Spannungsversorgungsknoten mit dem ersten Knoten des Flying Capacitor gekoppelt ist, und zwar unter Verwendung des ersten Schalters, und der Erdungsknoten ist mit dem zweiten Knoten des Flying Capacitor verbunden, und zwar während des zweiten Verstärkungsmodus; und
das Schaltersteuerungsmodul ist konfiguriert zum Verringern des An-Widerstands des ersten Schalters mit der Zeit während des zweiten Verstärkungsmodus.

4. Die Vorrichtung gemäß Anspruch 3, wobei die Mehrzahl von Schaltern durch das Schaltersteuerungsmodul zu Folgendem konfiguriert ist:
Verbinden des ersten Knotens des Flying Capacitor mit dem Spannungsversorgungsknoten und des zweiten Knotens des Flying Capacitor mit dem Ausgangsspannungsknoten während einer ersten Phase des ersten Verstärkungsmodus; und
Verbinden des ersten Knotens des Flying Capacitor mit dem Ausgangsspannungsknoten und des zweiten Knotens des Flying Capacitor mit dem Erdungsknoten während einer zweiten Phase des ersten Verstärkungsmodus.

5. Die Vorrichtung gemäß Anspruch 3, wobei der An-Widerstand des ersten Schalters konfiguriert ist, mit der Zeit verringert zu werden, und zwar nur während einer ersten Phase des zweiten Verstärkungsmodus folgend auf eine Veränderung von dem ersten Verstärkungsmodus zu dem zweiten Verstärkungsmodus.

6. Die Vorrichtung gemäß Anspruch 3, wobei die Mehrzahl von Schaltern durch das Schaltersteuerungsmodul zu Folgendem konfiguriert ist:
Verbinden des ersten Knotens des Flying Capacitor mit dem Spannungsversorgungsknoten und des zweiten Knotens des Flying Capacitor mit dem Erdungsknoten, und zwar während einer ersten Phase des zweiten Verstärkungsmodus; und
Verbinden des ersten Knotens des Flying Capacitor mit dem Erdungsknoten und des zweiten Knotens des Flying Capacitor mit einem Knoten einer negativen Ausgangsspannung, und zwar während einer zweiten Phase des zweiten Verstärkungsmodus; und bevorzugt
Ist die Mehrzahl von Schaltern ferner konfiguriert durch das Schaltersteuerungsmodul zum:
Verbinden des ersten Knotens des Flying Capacitor mit dem Spannungsversorgungsknoten und des zweiten Knotens des Flying Capacitor mit dem Ausgangsspannungsknoten während einer ersten Phase des ersten Verstärkungsmodus;
Verbinden des zweiten Knotens des Flying Capacitor mit dem Ausgangsspannungsknoten und des zweiten Knotens des Flying Capacitor mit dem Erdungsknoten, und zwar während einer zweiten Phase des ersten Verstärkungsmodus; und
Verbinden des ersten Knotens des Flying Capacitor mit dem Erdungsknoten und des zweiten Knotens des Flying Capacitor mit dem Knoten einer negativen Ausgangsspannung während einer dritten Phase des ersten Verstärkungsmodus.

7. Die Vorrichtung gemäß Anspruch 1, wobei der mindestens eine Schalter eine Mehrzahl von Unterschaltern aufweist, welche parallelgeschaltet sind, wobei das Schaltersteuerungsmodul dazu konfiguriert ist, den An-Widerstand des mindestens einen Schalters durch selektives Schließen der Mehrzahl von Unterschaltern in aufeinanderfolgender Art und Weise zu verringern; oder
der mindestens eine Schalter beinhaltet einen MOS Transistor, wobei das Schaltersteuerungsmodul konfiguriert ist zum Verringern des An-Widerstands des mindestens einen Schalters, und zwar durch Erhöhen einer Gate-Spannung des MOS Transistors.

8. Die Vorrichtung gemäß Anspruch 3, wobei die Mehrzahl von Schaltern ferner einen Bypassschalter aufweist, welcher durch das Schaltersteuerungsmodul konfiguriert ist, den Spannungsversorgungsknoten mit dem Knoten einer positiven Ausgangsspannung zu verbinden, und zwar während des zweiten Verstärkungsmodus, und bevorzugt ist das Schaltersteuerungsmodul dazu konfiguriert, den An-Widerstand des Bypassschalters während des zweiten Verstärkungsmodus zu verringern; oder
die Mehrzahl von Schaltern ist zu Folgendem konfiguriert:
Verbinden des ersten Knotens des Flying Capacitor mit dem Ausgangsspannungsknoten und des zweiten Knotens des Flying Capacitor mit dem Erdungsknoten, und zwar während einer ersten Phase des ersten Verstärkungsmodus; und
Verbinden des ersten Knotens des Flying Capacitor mit dem Spannungsversorgungsknoten und des zweiten Knotens des Flying Capacitor mit dem Ausgangsspannungsknoten, und zwar während einer zweiten Phase des ersten Verstärkungsmodus.

9. Ein Verfahren, welches Folgendes aufweist:
aufeinanderfolgendes Verbinden und Trennen von ersten und zweiten Knoten eines Flying Capacitor mit einer Mehrzahl von Knoten über eine erste Mehrzahl von sequenziellen Phasen, wenn ein Betrieb in einem ersten Verstärkungsmodus erfolgt, und
aufeinanderfolgendes Verbinden und Trennen von ersten und zweiten Knoten des Flying Capacitor mit einer Mehrzahl von Knoten über eine zweite Mehrzahl von sequenziellen Phasen, wenn ein Betrieb in einem zweiten Verstärkungsmodus erfolgt; **dadurch gekennzeichnet, dass** es einen Schritt des Variierens des An-Widerstands von mindestens einem der Mehrzahl von Schaltern mit der Zeit aufweist.

10. Das Verfahren gemäß Anspruch 9, wobei die Mehrzahl von Knoten einen Spannungsversorgungsknoten, einen Knoten einer positiven Ausgangsspannung und einen Erdungsknoten aufweist.

11. Das Verfahren gemäß Anspruch 10, wobei die Mehrzahl von Schaltern einen ersten Schalter aufweist, wobei das Verfahren ferner folgende Schritte aufweist:
Konfigurieren der Mehrzahl von Schaltern zum Betrieb in ersten und zweiten Verstärkungsmodi;
Verbinden des Spannungsversorgungsknotens mit dem ersten Knoten des Flying Capacitor unter Verwendung des ersten Schalters und Verbinden des Erdungsknotens mit dem zweiten Knoten des Flying Capacitor während des zweiten Verstärkungsmodus; und
Verringern des An-Widerstands des ersten Schalters mit der Zeit, und zwar während des zweiten Verstärkungsmodus.

12. Das Verfahren gemäß Anspruch 11, wobei das aufeinanderfolgende Verbinden und Trennen Folgendes aufweist:
Verbinden des ersten Knotens des Flying Capacitor mit dem Spannungsversorgungsknoten und Verbinden des zweiten Knotens des Flying Capacitor mit dem Ausgangsspannungsknoten während einer ersten Phase des ersten Verstärkungsmodus; und
Verbinden des ersten Knotens des Flying Capacitor mit dem Ausgangsspannungsknoten und Verbinden des zweiten Knotens des Flying Capacitor mit dem Erdungsknoten während einer zweiten Phase des ersten Verstärkungsmodus; und bevorzugt
Verbinden des ersten Knotens des Flying Capacitor mit dem Erdungsknoten und des zweiten Knotens des Flying Capacitor mit dem Knoten einer negativen Ausgangsspannung, und zwar während einer dritten Phase des ersten Verstärkungsmodus.

13. Das Verfahren gemäß Anspruch 11, wobei das Verringern des An-Widerstands des ersten Schalters mit der Zeit während des zweiten Verstärkungsmodus ein Verringern des An-Widerstands nur während einer ersten Phase des zweiten Verstärkungsmodus beinhaltet, und zwar folgend auf eine Veränderung von dem ersten Verstärkungsmodus zu dem zweiten Verstärkungsmodus; und bevorzugt ferner Folgendes aufweist:
während einer zweiten Phase des zweiten Verstärkungsmodus, Verbinden des ersten Knotens des Flying Capacitor mit dem Erdungsknoten, und Verbinden des zweiten Knotens des Flying Capacitor mit einem Knoten einer negativen Ausgangsspannung.

14. Das Verfahren gemäß Anspruch 10, wobei das Variieren des An-Widerstands des mindestens einen der Mehrzahl von Schaltern das selektive Schließen einer Mehrzahl von Unterschaltern in aufeinanderfolgender Art und Weise beinhaltet; oder das Variieren des An-Widerstands des mindestens einen der Mehrzahl von Schaltern das Erhöhen einer Gate-Spannung eines MOS Transistors beinhaltet.

15. Das Verfahren gemäß Anspruch 11, welches ferner Folgendes aufweist:
während des zweiten Verstärkungsmodus, Verbinden des Spannungsversorgungsknotens mit dem Knoten einer positiven Ausgangsspannung unter Verwendung eines Bypassschalters; und bevorzugt
ferner aufweisend eine Verringerung des An-Widerstands des Bypassschalters während des zweiten Verstärkungsmodus; und ferner bevorzugt
beinhaltet das Verringern des An-Widerstands des Bypassschalters ein selektives Schließen einer Mehrzahl von Unterschaltern in aufeinanderfolgender Art und Weise; oder der Bypassschalter beinhaltet einen MOS Transistor, wobei das Verringern des An-Widerstands des Bypassschalters eine Erhöhung einer Gate-Spannung des MOS Transistors beinhaltet.

## Revendications

1. Dispositif de pompe de charge comprenant :
un module de commande de commutateurs (123) ; et
une pluralité de commutateurs (S1-S6) configurés par le module de commande de commutateurs pour :
coupler et découpler successivement des premier (C1p) et deuxième (C1n) noeuds d'un condensateur volant (Cfly) à une pluralité de noeuds (Vdd, GND, Vpos, Vneg) sur une première pluralité de phases séquentielles lors d'un fonctionnement dans un premier mode de gain, et
coupler et découpler successivement les premier et deuxième noeuds du condensateur volant à la pluralité de noeuds sur une deuxième pluralité de phases séquentielles lors d'un fonctionnement dans d'un deuxième mode de gain ;
**caractérisé en ce qu'**au moins l'un de la pluralité de commutateurs est agencé pour avoir une résistance variable à l'état passant.

2. Dispositif selon la revendication 1, dans lequel la pluralité de noeuds comprend un noeud de tension d'alimentation, un noeud de tension de sortie positive, et un noeud de masse.

3. Dispositif selon la revendication 1, la pluralité de commutateurs comprenant un premier commutateur, dans lequel :
la pluralité de commutateurs est agencée pour un fonctionnement dans des premier et deuxième modes de gain ;
le noeud de tension d'alimentation est couplé au premier noeud de condensateur volant en utilisant le premier commutateur et le noeud de masse est couplé au deuxième noeud de condensateur volant pendant le deuxième mode de gain ; et
le module de commande de commutateurs est agencé pour diminuer la résistance à l'état passant du premier commutateur dans le temps pendant le deuxième mode de gain.

4. Dispositif selon la revendication 3, la pluralité de commutateurs étant configurée par le module de commande de commutateurs pour :
coupler le premier noeud de condensateur volant au noeud de tension d'alimentation et le deuxième noeud de condensateur volant au noeud de tension de sortie pendant une première phase du premier mode de gain ;
coupler le premier noeud de condensateur volant au noeud de tension de sortie et le deuxième noeud de condensateur volant à la masse pendant une deuxième phase du premier mode de gain.

5. Dispositif selon la revendication 3, dans lequel la résistance à l'état passant du premier commutateur est agencée pour être diminuée dans le temps seulement pendant une première phase du deuxième mode de gain à la suite d'un changement du premier mode de gain vers le deuxième mode de gain.

6. Dispositif selon la revendication 3, dans lequel la pluralité de commutateurs est configurée par le module de commande de commutateurs pour :
coupler le premier noeud de condensateur volant au noeud de tension d'alimentation et le deuxième noeud de condensateur volant au noeud de masse pendant une première phase du deuxième mode de gain ; et
coupler le premier noeud de condensateur volant au noeud de masse et le deuxième noeud de condensateur volant à un noeud de tension de sortie négative pendant une deuxième phase du deuxième mode de gain ; et de préférence
la pluralité de commutateurs est en outre configurée par le module de commande de commutateurs pour :
coupler le premier noeud de condensateur volant au noeud de tension d'alimentation et le deuxième noeud de condensateur volant au noeud de tension de sortie pendant une première phase du premier mode de gain ;
coupler le premier noeud de condensateur volant au noeud de tension de sortie et le deuxième noeud de condensateur volant au noeud de masse pendant une deuxième phase du premier mode de gain ; et
coupler le premier noeud de condensateur volant au noeud de masse et le deuxième noeud de condensateur volant au noeud de tension de sortie négative pendant une troisième phase du premier mode de gain.

7. Dispositif selon la revendication 1, dans lequel ledit au moins un commutateur comprend une pluralité de sous-commutateurs couplés en parallèle, le module de commande commutateurs étant agencé pour diminuer la résistance à l'état passant dudit au moins un commutateur en fermant sélectivement la pluralité de sous-commutateurs successivement ; ou
ledit au moins un commutateur comprenant un transistor MOS, le module de commande de commutateurs étant agencé pour diminuer la résistance à l'état passant dudit au moins un commutateur en augmentant une tension de grille du transistor MOS.

8. Dispositif selon la revendication 3, dans lequel la pluralité de commutateurs comprend en outre un commutateur de contournement configuré par le module de commande de commutateurs pour coupler le noeud de tension d'alimentation au noeud de tension de sortie positive pendant le deuxième mode de gain, et de préférence le module de commande de commutateurs est agencé pour diminuer la résistance à l'état passant du commutateur de contournement pendant le deuxième mode de gain ; ou
la pluralité de commutateurs est configurée pour :
coupler le premier noeud de condensateur volant au noeud de tension de sortie et le deuxième noeud de condensateur volant au noeud de masse pendant une première phase du premier mode de gain ; et
coupler le premier noeud de condensateur volant au noeud de tension d'alimentation et le deuxième noeud de condensateur volant au noeud de tension de sortie pendant une deuxième phase du premier mode de gain.

9. Procédé comprenant :
coupler et découpler successivement des premier et deuxième noeuds d'un condensateur volant à une pluralité de noeuds sur une première pluralité de phases séquentielles pendant un fonctionnement dans un premier mode de gain, et
coupler et découpler successivement les premier et deuxième noeuds du condensateur volant à une pluralité de noeuds sur une deuxième pluralité de phases séquentielles lors d'un fonctionnement dans un deuxième mode de gain ;
**caractérisé en ce qu'**il comprend l'étape suivante
faire varier la résistance à l'état passant d'au moins l'un de la pluralité de commutateurs dans le temps.

10. Procédé selon la revendication 9, dans lequel la pluralité de noeuds comprend un noeud de tension d'alimentation, un noeud de tension de sortie positive et un noeud de masse.

11. Procédé selon la revendication 10, dans lequel la pluralité de commutateurs comprend un premier commutateur, le procédé comprenant en outre :
configurer la pluralité de commutateurs pour un fonctionnement dans des premier et deuxième modes de gain ;
coupler le noeud de tension d'alimentation au premier noeud de condensateur volant en utilisant le premier commutateur et coupler le noeud de masse au deuxième noeud de condensateur volant pendant le deuxième mode de gain ; et
diminuer la résistance à l'état passant du premier commutateur dans le temps pendant le deuxième mode de gain.

12. Procédé selon la revendication 11, le couplage et le découplage successifs comprenant :
coupler le premier noeud de condensateur volant au noeud de tension d'alimentation et coupler le deuxième noeud de condensateur volant au noeud de tension de sortie pendant une première phase du premier mode de gain ; et
coupler le premier noeud de condensateur volant au noeud de tension de sortie et coupler le deuxième noeud de condensateur volant au noeud de masse pendant une deuxième phase du premier mode de gain ; et de préférence
coupler le premier noeud de condensateur volant au noeud de masse et le deuxième noeud de condensateur volant au noeud de tension de sortie négative pendant une troisième phase du premier mode de gain.

13. Procédé selon la revendication 11, dans lequel la diminution de la résistance à l'état passant du premier commutateur dans le temps pendant le deuxième mode de gain comprend une diminution de la résistance à l'état passant seulement pendant une première phase du deuxième mode de gain à la suite d'un changement du premier mode de gain vers le deuxième mode de gain ; et de préférence
comprenant en outre
pendant une deuxième phase du deuxième mode de gain, coupler le premier noeud de condensateur volant au noeud de masse, et coupler le deuxième noeud de condensateur volant à un noeud de tension de sortie négative.

14. Procédé selon la revendication 10, dans lequel le fait de faire varier la résistance à l'état passant d'au moins l'un de la pluralité de commutateurs comprend de fermer sélectivement une pluralité de sous-commutateurs successivement ; ou
le fait de faire varier la résistance à l'état passant d'au moins l'un de la pluralité de commutateurs comprend d'augmenter une tension de grille d'un transistor MOS.

15. Procédé selon la revendication 11, comprenant en outre :
pendant le deuxième mode de gain, coupler le noeud de tension d'alimentation au noeud de tension de sortie positive en utilisant un commutateur de contournement ; et de préférence
comprenant en outre de diminuer la résistance à l'état passant du commutateur de contournement pendant le deuxième mode de gain ; et en outre de préférence
la diminution de la résistance à l'état passant du commutateur de contournement comprenant une fermeture sélective d'une pluralité de sous-commutateurs successivement ; ou le commutateur de contournement comprenant un transistor MOS, la diminution de la résistance à l'état passant du commutateur de contournement comprenant une augmentation de la tension de grille du transistor MOS.
